# EUROPEAN PATENT APPLICATION

(11) **EP 3 598 767 A1**
(43) Date of publication of application: **22.01.2020**
(21) Application number: 18305966.6
(22) Date of filing: 17.07.2018
(51) Int. Cl.: H04N 21/434, H04N 21/845, H04H 20/28

(54) **METHOD FOR TRANSMITTING AND FOR RECEIVING OF ADAPTIVE STREAMING CONTENT OVER A UNIDIRECTIONAL RADIO FREQUENCY NETWORK AND CORRESPONDING APPARATUSES**

(71) Applicant: THOMSON LICENSING, 92130 Issy les Moulineaux (FR)
(72) Inventor: MENANT, Pascal, 35576 Cesson-Sévigné (FR); CONTRI, Stephane, 35576 Cesson-Sévigné (FR); LE GARJAN, Bruno, 35576 Cesson-Sévigné (FR)
(74) Representative: Huchet, Anne

(57) **Abstract**

Adaptive Streaming digital video and/or audio services ("AS services") are transmitted via a broadcast distribution network. The AS services can be added to the traditional broadcast programming to enhance the service offering. The AS services are encapsulated for transport in an MPEG-TS, including the manifest file and stream chunks. A descriptor ("E-descriptor") is added to the Service Information ("SI") and Program Specific Information ("PSI") to enable discovery and selection of the AS services by a receiver. The receiver installs the AS services based on the E-descriptor. If an AS services is selected, it is decapsulated and manifest files are served by an AS server in the receiver. An AS receiver in the receiver reads the manifest files, fetches the chunks from the AS server, converts these to a video and/or audio elementary streams and inputs these into a decoder, which outputs decoded streams for a renderer.

## Description

### FIELD

The present disclosure generally relates to the field of acquisition of service installation information for an electronic device in order to give the electronic device access to video and/or audio digital broadcast services. The present disclosure relates in particular to service discovery and installation of Over The Top (OTT) digital television channels and radio channels for Set Top Boxes and digital televisions that do not have access to a return channel.

### BACKGROUND

Any background information described herein is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that these statements are to be read in this light.

Receivers for receiving digital data including video and/or audio broadcast channels ("services") may receive digital content streams via various networks. These networks can globally be divided in unidirectional networks and bidirectional networks. In the unidirectional network, a receiver of digital video and/or audio services cannot communicate with the transmitter, while this is possible in the bidirectional network. Unidirectional networks for transport of digital video and/or audio services are mainly Radio Frequency (RF) networks that transmit traditional broadcast digital video and/or audio services. Bidirectional communication networks are mainly Internet Protocol (IP) networks that transport both traditional broadcast digital video and/or audio services (i.e. so-called "live" services) as well as Video on Demand (VoD) services. Examples of unidirectional networks for transport of digital video and/or audio services are satellite, terrestrial and cable networks. Bidirectional networks can be divided in managed and unmanaged networks. An example of a managed bidirectional network is a dedicated Internet Protocol TeleVision (IPTV) network using User Datagram or Real-time Transport protocols (UDP/RTP) to transport broadcast services and using Real-Time Streaming protocol (RTSP) to transport VoD services. Examples of unmanaged IP networks are public IP networks and OTT networks where broadcast and VoD digital audio and/or video services are transported using, for example, HyperText Transfer Protocol (HTTP), HTTP Live Streaming (HLS), Dynamic Adaptive Streaming over HTTP (DASH) and HTTP Smooth Streaming (HSS) protocols that enable to cope with the variable transport quality that is inherent to these unmanaged networks.

Digital receivers such as included in Digital TVs (DTVs) and dedicated Set Top Boxes (STBs) may have several Front-Ends (FEs) or tuners for receiving digital data including video and/or audio from one or more of the above discussed network types. These digital receivers are commonly referred to as hybrid receivers. Hybrid receivers typically have an RF front-end and an Ethernet interface, and are able to receive digital video and/or audio services transported over RF and IP.

Broadcasters of digital video and/or audio services mainly use unidirectional RF (satellite, terrestrial, cable) networks and managed IPTV networks for transmission of digital video and/or audio services because of the good and constant transport quality provided via these networks, which make these networks particularly suited for transporting high-quality digital video to consumers. However, with the advent of Fiber To The Home (FFTH) and the introduction of previously discussed Adaptive Streaming (AS) protocols, the quality of digital video services transported over non-managed IP-based networks has become sufficiently good. Broadcasters may therefore seek to expand their service offering by including additional OTT video and/or radio channels available from public IP networks.

However, while the traditional unidirectional streaming ('broadcasting') of digital video services over RF networks is very bandwidth and cost efficient, the provision of additional OTT content to many subscribers via the public Internet, and in particular the streaming of high-quality video content, has a high impact on network bandwidth, and, consequently, on transport cost.

It is therefore desirable to provide a solution to at least some of the above problems.

### SUMMARY

According to one aspect of the present disclosure, there is provided a method for transmitting adaptive streaming content over a unidirectional radio frequency transmission network. The method is implemented by a radio frequency transmitter. The method comprises retrieving, from an adaptive streaming Internet Protocol source, at least one manifest file comprising references to adaptive streaming content chunks of the adaptive streaming content for at least one bitrate and retrieving adaptive streaming content chunks, referenced in the at least one manifest file, of at least one selected bitrate. The method further comprises encapsulating, according to an encapsulation protocol for carrying Internet Protocol streams in a transport stream, the retrieved adaptive streaming content chunks and the at least one manifest file in at least one transport stream. The method further comprises adding, to a first signalization descriptor for discovery of channels by at least one receiver device, at least one packet identifier of at least one second signalization descriptor containing, for the at least one receiver device, tuning information for retrieving the at least one transport stream comprising the at least one manifest file and the adaptive streaming content chunks of the at least one selected bitrate. The method further comprises transmitting the first and the at least one second signalization descriptor and the at least one transport stream via the unidirectional radio frequency transmission network. Finally, the method further comprises iterating the method for updates received of the at least one manifest file.

According to a further aspect of the method for transmitting, the selected bitrate is a highest bitrate of the at least one bitrate.

According to a further aspect of the method for transmitting, the encapsulating is according to Multiprotocol Encapsulation or Unidirectional Lightweight Encapsulation.

According to a further aspect of the method for transmitting, the adaptive streaming Internet Protocol source is an Over The Top Internet Protocol source.

According to one aspect of the present disclosure, there is provided a method for receiving adaptive streaming content from a unidirectional radio frequency transmission network. The method for receiving is implemented by a radio frequency receiver device. The method comprises acquiring, from the unidirectional radio frequency transmission network, a first signalization descriptor for discovery of channels by the radio frequency receiver device. The method for receiving further comprises retrieving, from the first signalization descriptor, at least one packet identifier of at least one second signalization descriptor containing, for the radio frequency receiver device, tuning information for retrieving at least one transport stream comprising at least one manifest file and adaptive streaming content chunks of at least one bitrate of at least one channel. The method for receiving further comprises receiving a selection of one of the at least one channel. The method for receiving further comprises tuning, based on the tuning information, to a transport stream comprising the selected channel, decapsulating the transport stream and retrieving, from the decapsulated transport stream, a manifest file comprising references to adaptive streaming chunks of the selected adaptive streaming channel and retrieving, from the decapsulated transport stream, the referenced adaptive streaming chunks. The method for receiving further comprises replacing the references in the manifest file by an Internet Protocol address of a local Internet Protocol server in the receiver device. The method for receiving further comprises providing, via the local Internet Protocol server, the manifest file and the referenced adaptive streaming chunks to an adaptive streaming client in the radio frequency receiver device for acquiring, decoding and rendering of the referenced adaptive streaming chunks of the selected channel. Finally, the method for receiving comprises iterating the replacing and the providing upon updates received to the manifest file.

According to a further aspect of the method for receiving, the selected bitrate is a highest bitrate of the at least one bitrate.

According to a further aspect of the method for receiving, the encapsulating is according to Multiprotocol Encapsulation or Unidirectional Lightweight Encapsulation.

According to a further aspect of the method for receiving, the adaptive streaming Internet Protocol source is an Over The Top Internet Protocol source.

The present description also relates to a transmitter device for transmitting adaptive streaming content over a unidirectional radio frequency transmission network. The transmitter device comprises a processor configured to retrieve, from an adaptive streaming Internet Protocol source, at least one manifest file comprising references to adaptive streaming content chunks of the adaptive streaming content for at least one bitrate and to retrieve adaptive streaming content chunks, referenced in the at least one manifest file, of at least one selected bitrate; to encapsulate, according to an encapsulation protocol for carrying Internet Protocol streams in a transport stream, the retrieved adaptive streaming content chunks and the at least one manifest file in at least one transport stream; to add, to a first signalization descriptor for discovery of channels by at least one receiver device, at least one packet identifier of at least one second signalization descriptor containing, for the at least one receiver device, tuning information for retrieving the at least one transport stream comprising the at least one manifest file and the adaptive streaming content chunks of the at least one selected bitrate; to transmit the first and the at least one second signalization descriptor and the at least one transport stream via the unidirectional radio frequency transmission network; and to iterate the adding and the transmitting for updates received of the at least one manifest file.

According to a further aspect of the transmitter device, the selected bitrate is a highest bitrate of the at least one bitrate.

According to a further aspect of the transmitter device, the the encapsulating is according to Multiprotocol Encapsulation or Unidirectional Lightweight Encapsulation.

According to a further aspect of the transmitter device, the adaptive streaming Internet Protocol source is an Over The Top Internet Protocol source.

The present description also relates to a receiver device for receiving adaptive streaming content from a unidirectional radio frequency transmission network. The receiver device comprises a processor configured: to acquire, from the unidirectional radio frequency transmission network, a first signalization descriptor for discovery of channels by the receiver device; to retrieve, from the first signalization descriptor, at least one packet identifier of at least one second signalization descriptor containing, for the radio frequency receiver device, tuning information for retrieving at least one transport stream comprising at least one manifest file and adaptive streaming content chunks of at least one bitrate of at least one channel; to receive a selection of one of the at least one channel; to tune, based on the tuning information, to a transport stream comprising the selected channel, to decapsulate the transport stream and to retrieve, from the decapsulated transport stream, a manifest file comprising references to adaptive streaming chunks of the selected adaptive streaming channel and to retrieve, from the decapsulated transport stream, the referenced adaptive streaming chunks; to replace the references in the manifest file by an Internet Protocol address of a local Internet Protocol server in the receiver device; to provide, via the local Internet Protocol server, the manifest file and the referenced adaptive streaming chunks to an adaptive streaming client in the radio frequency receiver device for acquiring, decoding and rendering of the referenced adaptive streaming chunks of the selected channel; and to iterate the replacing and the providing upon updates received to the manifest file.

According to a further aspect of the receiver device, the selected bitrate is a highest bitrate of the at least one bitrate.

According to a further aspect of the receiver device, the the encapsulating is according to Multiprotocol Encapsulation or Unidirectional Lightweight Encapsulation.

According to a further aspect of the receiver device, the adaptive streaming Internet Protocol source is an Over The Top Internet Protocol source.

### BRIEF DESCRIPTION OF THE DRAWINGS

More advantages of the present disclosure will appear through the description of particular, non-restricting embodiments. To describe the way the advantages of the present disclosure can be obtained, particular descriptions of the present disclosure are rendered by reference to specific embodiments thereof which are illustrated in the appended drawings. The drawings depict exemplary embodiments of the disclosure and are therefore not to be considered as limiting its scope. The embodiments described can be combined to form particular advantageous embodiments. In the following figures, items with same reference numbers as items already described in a previous figure will not be described again to avoid unnecessary obscuring the disclosure. The embodiments will be described with reference to the following drawings in which:
**Figure 1** is an example embodiment of a descriptor for a satellite delivery system according to the present disclosure.
**Figure 2** is an example embodiment of a descriptor for a terrestrial delivery system according to the present disclosure.
**Figure 3** is an example embodiment of a descriptor for a cable delivery system according to the present disclosure.
**Figure 4** is an embodiment of hierarchically organized OTT data for transport.
**Figure 5** is an embodiment of a transmitter device according to the present disclosure.
**Figure 6** is an embodiment of a receiver device according to the present description.
**Figure 7** is an alternative embodiment of a transmitter device according to the present disclosure.
**Figure 8** is an alternative embodiment of a receiver device according to the present disclosure.
**Figure 9** is a flow chart of an embodiment of the method for a transmitter device according to the present disclosure.
**Figure 10** is a flow chart of an embodiment of the method for a receiver device according to the present disclosure.

It should be understood that the drawings are for purposes of illustrating the concepts of the disclosure and are not necessarily the only possible configuration for illustrating the disclosure.

### DETAILED DESCRIPTION

The present description illustrates the description of the present disclosure. It will thus be appreciated that those skilled in the art will be able to devise various arrangements that, although not explicitly described or shown herein, embody the description of the disclosure and are included within its spirit and scope.

All examples and conditional language recited herein are intended for educational purposes to aid the reader in understanding the description of the disclosure and the concepts contributed by the inventor to furthering the art, and are to be construed as being without limitation to such specifically recited examples and conditions.

Moreover, all statements herein reciting description, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

As discussed in the preceding background section, providers of digital video and/or audio services may seek to improve their service offering by adding OTT video and/or audio services to the traditional broadcast service package. However, it is important to keep costs for delivery and rendering the additional services low while offering a quality of service that is comparable to that of the traditional broadcast services. To transport the additional OTT streams using the existing broadcasting chain, encapsulation protocols may be used such as Multiprotocol Encapsulation (MPE) or Unidirectional Lightweight Encapsulation (ULE). These encapsulation protocols enable to carry Internet Protocol streams in Transport Streams (e.g., MPEG2-TS) as used by traditional unidirectional broadcast networks. It allows to benefit from the bandwidth and cost efficiency of those networks, especially when a same content stream is to be provided to many users at a same time, e.g., in case of broadcast or live services (channels). However, OTT video streams were developed for distribution over unmanaged networks, mainly the public Internet network. Due to the variable transport quality of the public Internet network over which the OTT streams are distributed, OTT streams are generally only available in adaptive streaming format, also referred to as adaptive bitrate streaming format. According to the adaptive streaming format, a same content stream is proposed by an IP server in several encoding qualities, such as low, medium and high encoding quality, each with a corresponding bit rate and corresponding bandwidth footprint. Depending on the network conditions encountered by a receiver, the receiver chooses the bitrate that corresponds to its available bandwidth. To enable a receiver to react quickly to varying network conditions, the content stream is proposed by the IP server in segments or "chunks" of relatively short duration which depends on the implementation, typically ten seconds. Content streams are announced in a so-called manifest. A manifest contains, for a content stream, hyperlinks to different bitrate chunks of a same content stream. There may be an overall manifest which specifies the quality levels available and particular manifests for each available quality level. An example of an overall manifest is given here:

```
      #EXTM3U
      #EXT-X-STREAM-INF:PROGRAM-
      ID=1,BANDWIDTH=1280000,CODECS="vp8,vorbis",RESOLUTION=240x135
      http://example.com/low.m3u8
      #EXT-X-STREAM-INF:PROGRAM-
      ID=1,BANDWIDTH=2560000,CODECS="vp8,vorbis",RESOLUTION=640x360
      http://example.com/mid.m3u8
      #EXT-X-STREAM-INF:PROGRAM-
      ID=1,BANDWIDTH=7680000,CODECS="vp8,vorbis",RESOLUTION=1280x720
      http://example.com/hi.m3u8
```

An example of a particular manifest is given here:

```
      #EXTM3U
      #EXT-X-MEDIA-SEQUENCE:0
      #EXT-X-TARGETDURATION:10
      #EXTINF:10,
      http://media.example.com/segmentl.webm
      #EXTINF:10,
      http://media.example.com/segment2.webm
      #EXTINF:10,
      http://media.example.com/segment3.webm
      #EXT-X-ENDLIST
```

Adaptive streaming has clear advantages when streaming video content over non-managed networks but requires the use of bidirectional network for discovery of the streams and fetching of stream chunks. A priori, adaptive streaming is therefore incompatible with unidirectional networks because of the absence of a return channel in the unidirectional network. A provider wishing to improve the service offering by adding OTT channels to the subscription package may therefore keep the OTT services distribution chain. However, this requires the service provider to supply hybrid (both RF and IP) receivers to its customers, which has an impact on the cost of these receivers. In addition, in many geographical areas of the world, for example in rural areas, high-speed IP coverage is poor or inexistent, and many subscribers may therefore not have access to the additional OTT services.

According to the present disclosure, a solution is provided to at least some of these problems. To this end, the Service Information (SI) conveyed to a receiver through RF broadcast, as defined by, e.g., Digital Video Broadcasting (DVB), Advanced Television Systems Committee (ATSC), and Integrated Services Digital Broadcasting (ISDB) standards is modified, thereby enabling broadcast receivers without an Internet connection to discover the additional OTT adaptive streaming services encapsulated in the broadcast stream. This arrangement includes a novel descriptor, referred here to as 'E-descriptor'. The E-descriptor is included in broadcasted SI tables used for service discovery/installation and includes tuning information for a receiver device, i.e. information about the transponder frequencies on which Packet IDentifiers (PIDs) carrying encapsulated adaptive streams can be found. The E-descriptor can be added to some SI tables broadcasted in one, or all, transponder frequencies.

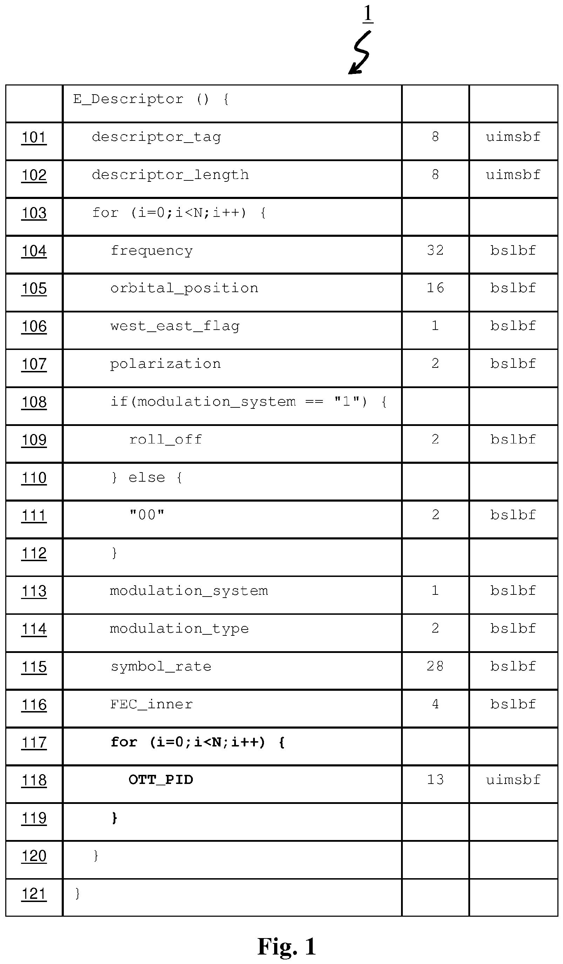

**Figure 1** is an example embodiment of an E-descriptor **1** for a satellite delivery system according to the present disclosure. The syntax of the E-descriptor **1** is based on descriptor formats commonly used in standard or normative documents. For example, "8 uimsbf" refers to the encoding format of the numeric or string, and means that the preceding numerical or string is encoded as an 8-bit unsigned integer, most significant bit first. Like indications, e.g., "32 bslbf", are well-known to the skilled person and are therefore not further explained here. E-descriptor **1** includes a descriptor_tag **101** which is an 8-bit field identifying each descriptor. For the E-descriptor, this is a unique number that identifies the descriptor as an E-descriptor. The field "descriptor_length" **102** is an 8-bit field specifying the total number of bytes of the data portion of the descriptor following the byte defining the value of this field. The "for" loop **103** indicates that the E-descriptor may include information for multiple transponders. The field "frequency" **104** is a 32-bit field giving the 4-bit Binary Coded Decimal (BCD) values specifying 8 characters of the frequency value of the transponder. The field "orbital_position" **105** is a 16-bit field giving the 4-bit BCD values specifying 4 characters of the orbital position in degrees. The "west_east_flag" **106** is a 1-bit field indicating if the satellite position is in the western or eastern part of the orbit. A value "0" indicates the western position and a value "1" indicates the eastern position. The "polarization" field **107** is a 2-bit field specifying the polarization of the transmitted signal. The first bit defines whether the polarization is linear or circular (00 linear - horizontal, 01 linear - vertical, 10 Circular - left, 11 Circular - right). The "roll_off" field **109/111,** dependent on the value of modulation_system field **113** as indicated through the "if" condition in row **108** and else branch **110,** is a 2-bit field specifying a roll-off factor used in DVB-S2, a DVB digital television broadcasting standard for satellite transmission and reception. The "modulation_system" field **113** is a 1-bit field specifying a broadcast scheme used on a satellite delivery system (e.g., 0 for DVB-S, 1 for DVB-S2). The "modulation_type" field **114** is a 2-bit field specifying the modulation scheme used on a satellite delivery system (e.g., 00=Auto; 01=QPSK; 10=8PSK; 11=16-QAM; n/a for DVB-S2). The "symbol_rate" field **115** is a 28-bit field giving the 4-bit BCD values specifying 7 characters of the symbol_rate. The "FEC_inner" field **116** is a 4-bit field specifying the inner FEC scheme used. PID_OTT field **118** is 13-bit field specifying a list of PIDs of encapsulated streams found on this transponder carrying OTT services. A single transponder may carry several of such streams, and the E-descriptor therefore includes a "for" loop **117.** Again, this kind of notation is standardized. Each of the streams identified by a PID_OTT **118** may carry several adaptive streaming channels. As mentioned above, other descriptor embodiments, compatible with the present disclosure, may be envisaged, such as an E-descriptor adapted to a terrestrial delivery system or an E-descriptor adapted to a cable delivery system, and may therefore include different fields than described here. A common feature between these different embodiments of E-descriptors is that the E-descriptors include a field or fields PID_OTT **118.** Rows **119** and **120** indicate a closure of "for" loop **117** respectively of "for" loop **103** respectively of E-descriptor **1.**

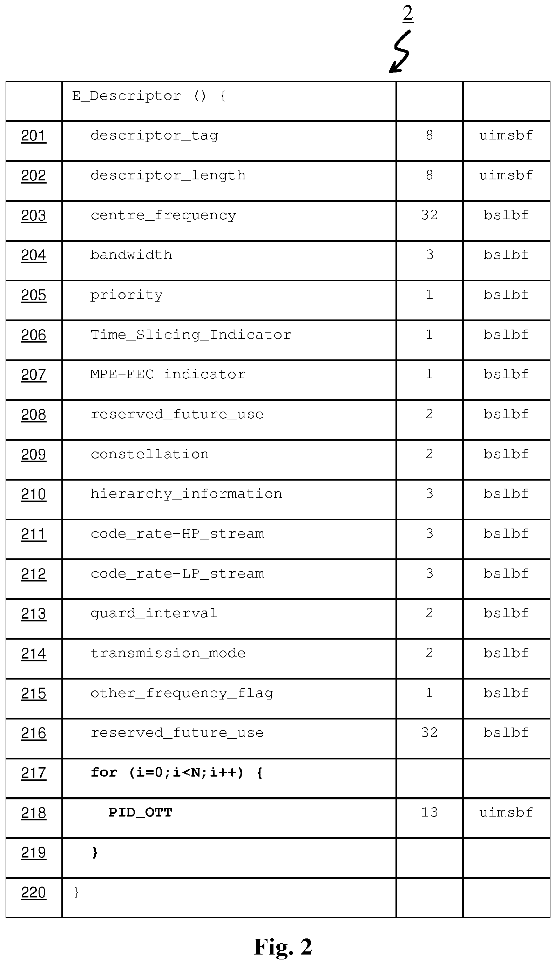

**Figure 2** is an example embodiment of an E-descriptor **2** for a terrestrial delivery system according to the present disclosure. The meaning of the fields **201-216** and **220** can be found in standard/normative documents. As in the satellite delivery system **1** of figure **1****,** E-descriptor **2** includes a "for" loop **217-219** which includes one or more PID_OTTs **218.**

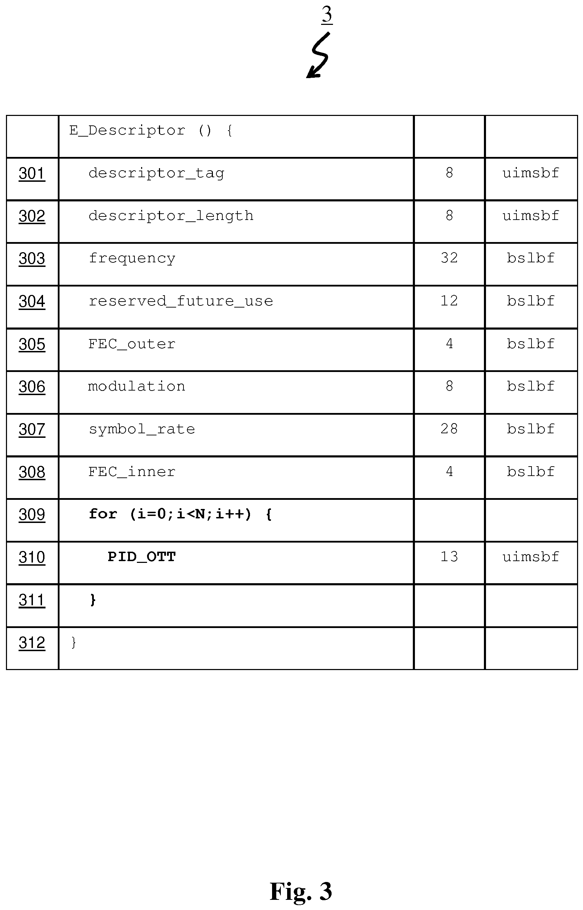

**Figure 3** is an example embodiment of an E-descriptor **3** for a cable delivery system according to the present disclosure. The meaning of the fields **301-308** and **312** can be found in standard/normative documents. As in the E-descriptor **1** of a satellite delivery system of figure **1** and in the E-descriptor **2** of a terrestrial delivery system of figure **2****,** the E-descriptor **3** of a cable delivery system includes a "for" loop **309-311** which includes one or more PID_OTTs **310.**

The E-descriptors presented in figures 1-3 are related to standard/norms and are mere example embodiments. It is noted that according to the present disclosure references to PID_OTTs can be inserted into different kinds of delivery system descriptors or being transmitted as a stand-alone descriptor only comprising a for loop like shown in these figures.

According to a particular embodiment, one or several E-descriptors are included in PSI/SI information tables, such as NIT (Network Information Table) or BAT (Bouquet Association Table).

According to an embodiment, a PID_OTT or a set of PID_OTT in an E-descriptor directly points/point to OTT data packets that can be extracted from an encapsulated transport stream. The OTT data packets include manifests, chunks, and possibly a list of OTT channels. For example, an E-descriptor includes the description for one transport stream comprising OTT data, and two OTT_PIDs, OTT_PID1 and OTT_PID2. OTT_PID1 corresponds to PIDs of packets in the transport stream which include a list of the four OTT channels for the two OTT_PIDs (the list including, for example, channel names and numbers), the manifest of the first channel, the chunks of the first channel, the manifest of the second channel and the chunks of the second channel. OTT_PID2 corresponds to PIDs of packets that can be extracted from the encapsulated transport stream which include the manifest of the third channel, the chunks of the third channel, the manifest of the fourth channel and the chunks of the fourth channel. The coding format of the OTT data is known and agreed upon by both the transmitter and the receiver, and the receiver can find and separate the channel list, manifests and chunks.

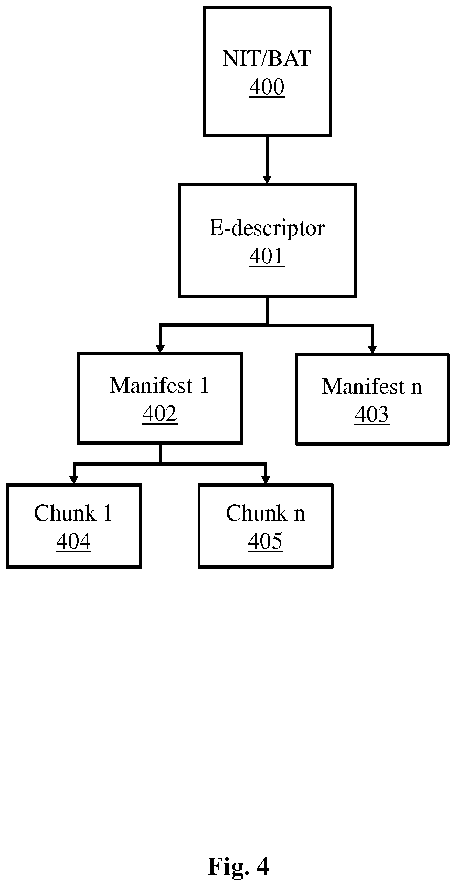

**Figure 4** is a different embodiment wherein the transport of OTT data is hierarchically organized. Like in the preceding described embodiment, a PSI/SI table (e.g., NIT or BAT) **400** includes an E-descriptor **401.** E-descriptor **401** may describe information for one or more transponders of a delivery system transporting OTT channels. Multiple transport streams may be transmitted on each transponder in a transport stream multiplex. Each transport stream corresponds, in this example, to one OTT channel, though a transport stream may include data of several channels. OTT_PIDs **118** in the E-descriptor correspond to PIDs of packets in an OTT transport stream transporting manifest files 1 (**402**) to n (**403**), one OTT_PID is therefore used per OTT channel. Each of the manifests **402** to **403** includes PIDs of packets in an OTT transport stream including content chunks 1 (**404**) to n (**405**) referenced in the manifest, i.e., in place of (replacing) the URLs found in a commonly used adaptive streaming manifest file for delivery of adaptive streaming content over the Internet.

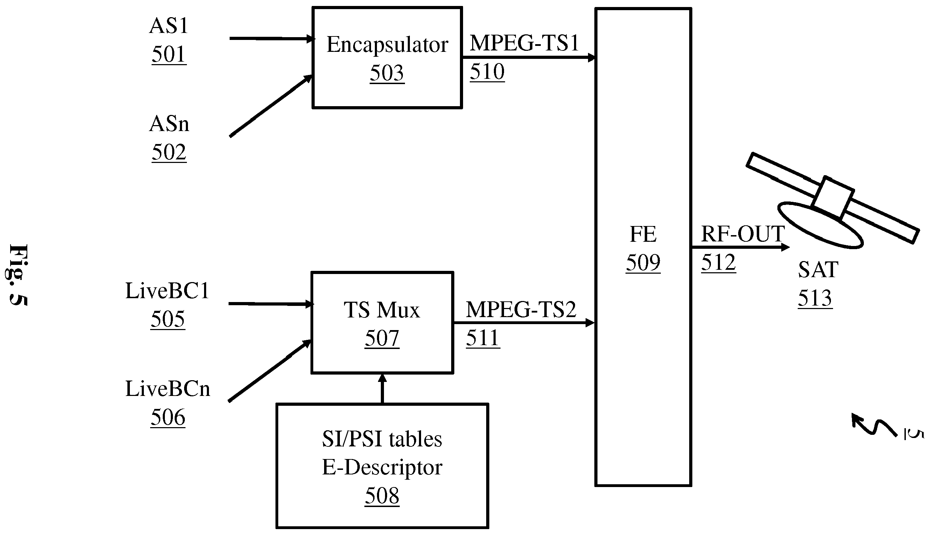

**Figure 5** is an embodiment of a satellite transmitter **5** according to the present disclosure. A first adaptive streaming OTT stream "AS1" **501** is input into encapsulator **503** which encapsulates stream **501** in MPE/ULE or other encapsulation protocol packets. A same operation is done for *n* other OTT streams until an *n*-th OTT stream "AS*n*" **502.** The encapsulator **503** creates and outputs an MPEG transport stream **510** ("MPEG-TS1") in which the different encapsulated OTT adaptive streams AS1 **501** to AS*n* **502** are multiplexed. As mentioned, the principle of an adaptive stream is that it is provided with a so-called manifest file commonly referred to as ".m3u8" file, based on its file extension. The manifest file contains, for a single stream, hyperlinks (URLs) to chunks of the stream in different bitrates and therefore corresponding to different bandwidths; e.g., in the case of a stream including video data, corresponding to different screen resolutions (e.g., low, medium and high). An adaptive streaming receiver wishing to play adaptively-streamed content (e.g., a video) first acquires the manifest file corresponding to the content stream and then acquires content chunks referenced in the manifest file, chunk by chunk, according to the available bandwidth. The receiver may thus acquire high bitrate chunks until it experiences a decrease in bandwidth and then may switch to acquisition of medium or low bitrate chunks until it experiences an increase in bandwidth again. As mentioned, chunks typically have a duration of 10 seconds to enable the receiver to react to rapidly changing network conditions. The manifest file is updated regularly by a server serving the manifest file, which avoids very long manifest files and also enables nearly-live streaming, although there will always exist an incompressible lag corresponding to the duration of at least one chunk because the transmitter needs to store the chunk. In a transmitter according to the present disclosure, encapsulator **503** acquires the manifest file of an adaptive streaming content, but because the content will be transported over the broadcast network, there is no problem of varying network conditions. The transmitter therefore fetches chunks of a selected set of bitrates/qualities only, for example High Definition (HD) and Ultra-High definition (e.g., 4K Ultra-HD or 8K Ultra-HD), includes the chunks of the selected bitrate/quality or bitrates/qualities in the encapsulated content stream and adds a corresponding manifest file or manifest files to its transmissions, e.g., to the content stream to which the manifest file/files relate(s). According to a particular embodiment, the transmitter adapts a manifest file, i.e., it changes its contents, before transmitting it. This adaptation may include removal of references in a manifest file to content chunks of the non-selected bitrate/quality or non-selected bitrates/qualities, which is/are not included in the encapsulated stream. The adaptation may also include replacement of URLs by URLs pointing to the content chunks in the encapsulated stream. For example, a URL in a manifest file of https://www.ottstream.com/x/chunk1.ts may be modified to https://192.168.1.1/x/chunk1.ts or https://10.12.30.196:8000/hls/chunk1.ts, where the IP address 192.168.1.1 or 10.12.30.196 corresponds to the IP address of a local HTTP server in the receiver. Alternatively, the manifest file is left unchanged during the encapsulation process and adaptations to the manifest file are done on the receiver side; however this requires the adaptation of the manifest file to be done by every receiver. The encapsulation is a continuous process because the manifest file is regularly updated by the adaptive streaming source as new chunks arrive. If an update is received of the manifest file, a new (updated) manifest file is transmitted by the transmitter, together with the chunks referenced the manifest file.

A transport stream MPEG-TS1 **510** may thus include manifest files and the content stream chunks referred to in the manifest files, the manifest files and the content stream chunks being encapsulated in the transport stream according to the chosen encapsulation protocol (MPE, ULE, or other).

According to an embodiment, transmitter **5** according transmits a catalog file which contains a list PIDs of transmitted manifest files. According to an embodiment, the catalog file is inserted in the OTT stream under the PID_OTT found in the E-descriptor.

According to an embodiment, transmitter **5** according to the present disclosure further includes other functional blocks for transmitting traditional (non-OTT, non-IP) broadcast channels. For example, transport stream multiplexer **507** receives n content streams "LiveBC1" **505** to "LiveBCn" **506,** adds Service Information (SI) and Program Specific Information (PSI) data tables related to these content streams, e.g., Network Information Table(s) (NIT, e.g., according to DVB-PSI) and/or Bouquet Association Table(s) (BAT, e.g., according to DVB-SI), multiplexes the content streams and the SI/PSI information tables and outputs an MPEG transport stream **511** ("MPEG-TS2") which includes the broadcast channels "LiveBC1" **505** to "LiveBCn" **506** and the SI/PSI information tables enabling a receiver to discover and acquire these broadcast channels. The transmitter **5** according to the present disclosure further adds to the SI/PSI information tables (e.g., NIT/BAT) the previously discussed E-descriptor(s), so as to enable the receiver according to the present disclosure to discover and acquire the additional OTT/IP content streams. Transport streams "MPEG-TS1" **510** and "MPEG-TS2" **511** are input into a Front End "FE" **509.** Front End **509** RF-modulates the transport streams "MPEG-TS1" **510** and "MPEG-TS2" **511** and transmits the RF-modulated transport streams **512** to a distribution center (not shown) which may uplink the transport streams to a satellite **513,** or FE **509** may transmit the transport streams **512** to a terrestrial or cable distribution center (not shown). If there are many OTT/IP channels to transport over the broadcast distribution network, multiple transport streams may be created for transporting the plurality of encapsulated OTT/IP channels, and likewise multiple transport streams may be created for transmission of the traditional broadcast channels. The resulting plurality of transport streams are regrouped in transport stream multiplexes by the front-end **509,** and transmitted on separate "transponders" meaning separate transponder frequencies wherein each transponder frequency carries a transport stream multiplex that includes a number of transport streams. Multiple transponders may be defined to carry a complete service offering including a plurality of broadcast and OTT/IP channels.

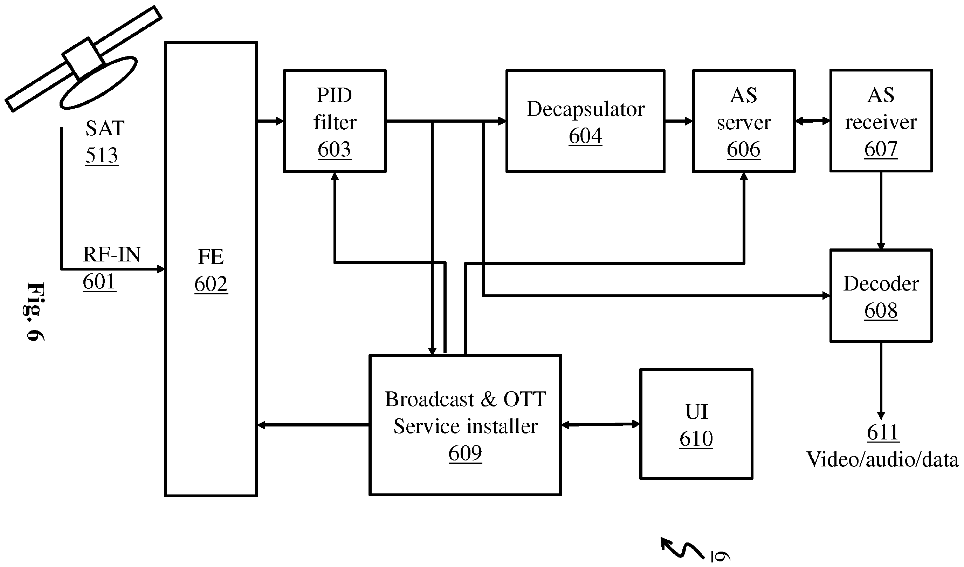

**Figure 6** is an embodiment of a receiver device **6** according to the present disclosure. Upon an installation procedure executed by the receiver device, generally during a first start up or launched automatically or upon user request, the receiver device **6** discovers and installs the "normal" broadcast channels e.g. received via a satellite, terrestrial or cable broadcast network, using prior art service discovery and installation protocols as described in the standard/normative documents related to the standard/norm used (e.g., according to DVB, ATSC, or ISDB). To this end, service installer **609** instructs Front End **602** to tune to a carrier frequency on which receiver installation information is transmitted and service installer **609** instructs PID filter **603** to filter packets with PIDs corresponding to SI/PSI information tables (e.g., NIT, BAT); the SI/PSI tables have specific, predefined PIDs which are specified in the applicable standard/norm. Service installer **609** retrieves the filtered SI/PSI data from the PID filter **603,** extracts service installation information from the SI/PSI data such as: available channels, channel names, channel transponder frequency of the transponder carrying the channel, transport stream PID of a transport stream carrying the channel content packets of the channel (e.g., video, audio, subtitles), PIDs of elementary streams (video, audio, subtitles, etc.), and stores this information, for example as a list of channels that can be received via the broadcast network, in a local memory (not shown), preferably a non-volatile local memory. This list can be retrieved by User Interface (Ul) **610** for presentation to a user (not shown) of the receiver device **6.** In addition to this, service installer **609** searches in the SI/PSI information for E-descriptor tables according to the present disclosure, extracts PIDs of OTT service installation information, e.g., as previously described with the aid of figures 3 and 4, and adds the discovered OTT/IP channels to the broadcast service discovery information stored in the local memory. The E-descriptor tables indicate the service installer **609** where to find an entry point for discovering the additional OTT services. For example, during the installation phase, the receiver device **6** connects to the transponders described in an embodiment of an E-descriptor described in this disclosure and monitors OTT_PIDs **118/218/310** for discovery of OTT services, which, when discovered, are then added to a list of channels stored in local memory and available to the user of the device **6.** After installation of the receiver **6** the user may select any of the traditional broadcast or OTT channels listed in the local memory, the receiver **6** using information acquired during the installation phase by the service installer **609** to "tune to" the particular transponder, to acquire the particular MPEG-TS transport stream transporting contents of the selected traditional broadcast or OTT channel, to decode the elementary streams (audio/video/subtitles, etc.) of the selected channel and to output the decoded streams for rendering.

If a user, via User Interface **610,** instructs the service installer **609** to tune to a *traditional broadcast* channel, the service installer **609** will know, based on the acquired PSI/SI tables, on which transponder to tune the front end **602,** which PIDs to filter by filter **603** to acquire the transport stream that transports the selected channel. The filtered transport stream is then provided to decoder **608.** Decoder **608** decodes the encoded elementary streams included in the selected transport stream and outputs the elementary streams for rendering by receiver **6** or by a rendering device coupled to receiver **6** (not shown). For the *additional OTT channel,* the acquisition of channel content is different when the user selects an OTT channel. Again, from the service installation information acquired and stored in local (e.g., non-volatile) memory, service installer **609** knows which transponder frequency to tune to for acquisition of a transport stream multiplex that includes a transport stream of the selected OTT channel, and knows the PIDs of the transport stream that must be filtered by the PID filter **603** to acquire the transport stream transporting the encapsulated packets of the selected OTT channel. Once service installer **609** has instructed Front End **602** to tune to the desired transponder frequency and has instructed the PID filter **603** to filter packets with the PIDs of the selected transport stream carrying the encapsulated packets of the selected OTT channel, the filtered transport stream output by PID filter **603** is input to decapsulator **604** which removes the encapsulation (e.g., MPE or ULE) packets. The decapsulated transport stream is then output by the decapsulator **604** and input into adaptive streaming server (AS server) **606** which extracts manifest files and video chunks from the OTT data provided by decapsulator **604.** AS server **606** then renders available the manifest file information via a local web (e.g., HTTP) server on a particular local IP address, e.g., 192.168.1.1 or 10.12.30.196, known by adaptive streaming receiver (AS receiver) **607.** If not already done on by transmitter **5,** AS server **606** modifies the URLs pointing to the content chunks in the manifest files as required, to point to the local IP address of AS server **607.** This modification includes amending URLs in manifests pointing to content chunks so that these correctly point to the local IP address of AS server **606.** In addition, AS server **606** acquires from the decapsulated transport stream the content chunks referred to in the manifest file(s), for which it receives instructions from the service installer **609,** indicating AS server **606** which packets in the decapsulated transport stream contain the content chunks referred to in the manifest file(s). AS server **606** temporarily stores the acquired content chunks in a local memory (not shown), preferably in a volatile memory, and makes the manifest file pointing to these chunks available via its local web (HTTP) server. This is a continuously repeated process as AS server **606** constantly monitors the output of the AS decapsulator **604** to retrieve any updates to the manifest file(s) (e.g., arrival of (a) new manifest file(s)) and retrieves and stores any chunks referred to in the updated manifest file in local (e.g., volatile) memory. AS receiver **607** retrieves manifest files from the AS server **606,** retrieves content chunks from the URLs indicated in the manifest file, concatenates these chunks and outputs the concatenated chunks as elementary content streams to decoder **608.** This is a constantly repeated process as the manifest file(s) is/are constantly updated by AS server **606** and new chunks are rendered available by AS server **606.** Finally, decoder **608** decodes the elementary content streams and outputs these on output(s) **611** for rendering by receiver **6,** or, if an external rendering device (not shown) is used, by the external rendering device coupled to receiver device **6.**

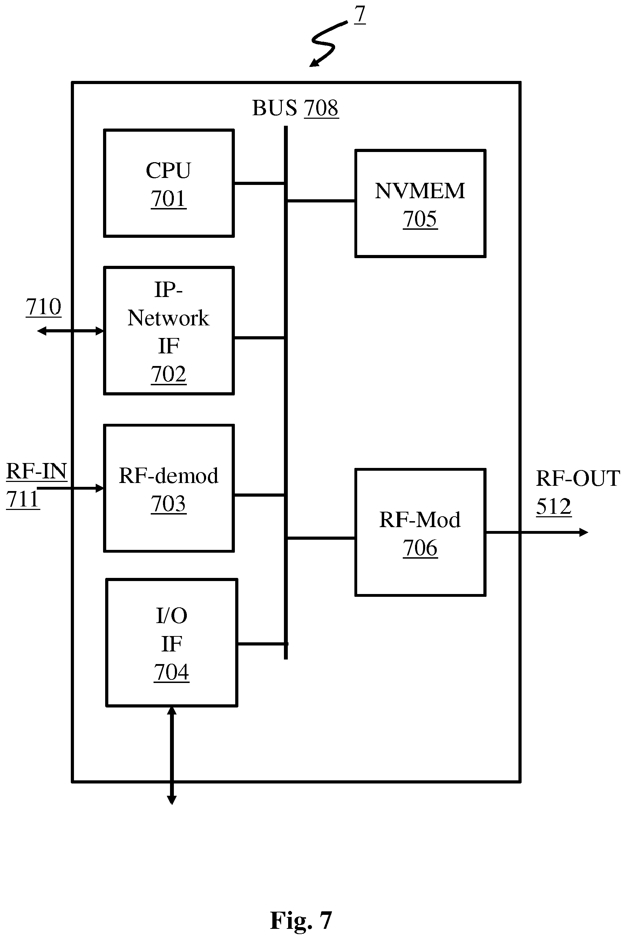

**Figure 7** is an alternative embodiment of a transmitter device according to the present disclosure. The transmitter device **7** includes a processor or central processing unit **701,** an IP network interface **702,** an I/O (Input/output) interface **703,** an RF demodulator **703,** an input-output interface **704,** a non-volatile memory **705,** and an RF modulator **706.** Elements **701-706** are interconnected via an internal communication bus **708.** Non-volatile memory **705** includes executable instructions which, when executed by processor **701,** define functions of transmitter **7.** A set of adaptive streaming OTT channels "AS1" **501** to adaptive streaming OTT stream "ASn" **502** are acquired by transmitter **7** from one or several servers on an IP network (e.g., a WAN) via connection **710** and IP network interface **702.** A set of traditional broadcast channels is acquired by transmitter **7** via RF-input **711** and RF-demodulator **703.** The acquired data of OTT channels AS1 to ASn is encapsulated according MPE/ULE or other encapsulation protocol packets by processor **701,** to form one or more encapsulated MPEG transport streams, see the description of figure 5 for further explanation of how this is done. An encapsulated transport stream may thus include manifest files, content stream chunks referred to in the manifest files, and even a catalog file containing a list of OTT channels included in the transport stream(s). Transmitter **7** also receives broadcast data via connection **710** from a source, for example from an IP server, in which case transmitter 7 acquires the broadcast data via OP network interface **702.** Alternatively, transmitter **7** receives broadcast data from an RF source, in which case transmitter **7** acquires the broadcast data via RF demodulator **703.** The broadcast data includes n content streams "LiveBC1" **505** to "LiveBCn" **506,** transmitter 7, using processor **701,** adds Service Information (SI) and Program Specific Information (PSI) data tables related to these content streams, e.g., Network Information Table(s) (NIT, e.g., according to DVB-PSI) and/or Bouquet Association Table(s) (BAT, e.g., according to DVB-SI), multiplexes the content streams and the SI/PSI information tables and outputs an MPEG transport stream **511** ("MPEG-TS2") which includes the broadcast channels "LiveBC1" **505** to "LiveBCn" **506** and the SI/PSI information tables enabling a receiver to discover and acquire these broadcast channels. The transmitter **7** according to the present disclosure, using processor **701,** further adds to the SI/PSI information tables (e.g., NIT/BAT) the previously discussed E-descriptor(s), so as to enable the receiver according to the present disclosure to discover and acquire the additional OTT/IP content streams. Transport streams "MPEG-TS1" **510** and "MPEG-TS2" **511** are input into a RF-modulator **706.** RF-modulator **706** RF-modulates the transport streams "MPEG-TS1" **510** and "MPEG-TS2" **511** and transmits the RF-modulated transport streams on RF-output **512** to a distribution center (not shown) which may uplink the transport streams to a satellite **513,** or transmits the transport streams on RF-output **512** to a terrestrial or cable distribution center (not shown). If there are many OTT/IP channels to transport over the broadcast distribution network, multiple transport streams may be created for transporting the plurality of encapsulated OTT/IP channels, and likewise multiple transport streams may be created for transmission of the traditional broadcast channels. The resulting plurality of transport streams are regrouped in transport stream multiplexes by the processor 701 in conjunction with RF-modulator **706,** and transmitted on separate "transponders" meaning separate transponder frequencies wherein each transponder frequency carries a transport stream multiplex that includes a number of transport streams. Multiple transponders may be defined to carry a complete service offering including a plurality of broadcast and OTT/IP channels.

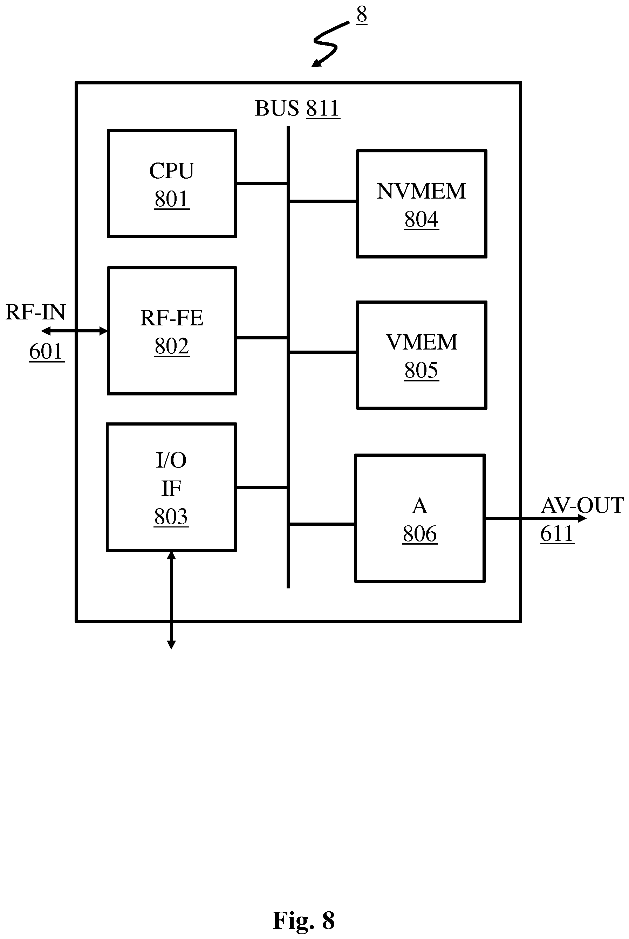

**Figure 8** is an alternative embodiment of a receiver device according to the present disclosure. The receiver device **8** includes a processor or central processing unit **801,** an RF-Front End ("RF-FE") **802** having an input "RF-IN" **601,** an input/output interface **803,** a non-volatile memory **804,** a volatile memory **805,** and an audio/video interface **806** having an output "AV-OUT" **611.** Elements **801-806** are interconnected via an internal communication bus **811.** Non-volatile memory **804** includes executable instructions which, when executed by processor **801,** define the functions of receiver device **8.** Upon an installation procedure executed by the receiver device **8,** for example upon first first start up, or launched automatically, or upon user request, the receiver device **8** discovers and installs the "normal" broadcast channels e.g. received via a satellite, terrestrial or cable broadcast network via RF Front End **802,** using prior art service discovery and installation protocols as described in the standard/normative documents related to the standard/norm used (e.g., according to DVB, ATSC, or ISDB). To this end, processor **801** instructs Front End **802** to tune to a carrier frequency on which receiver installation information is transmitted and processor **801** filters packets with PIDs corresponding to SI/PSI information tables (e.g., NIT, BAT). Processor **801** retrieves the filtered SI/PSI data, extracts service installation information from the SI/PSI data such as: available channels, channel names, channel transponder frequency of the transponder carrying the channel, transport stream PID of a transport stream carrying the channel content packets of the channel (e.g., video, audio, subtitles), PIDs of elementary streams (video, audio, subtitles, etc.), and stores this information, for example as a list of channels that can be received via the broadcast network, in local memory **804.** This list can be retrieved by User Interface (Ul) for presentation to a user (not shown) of the receiver device **8** via I/O (Input-output) interface **803.** In addition to this, processor **801** searches in the SI/PSI information for E-descriptor tables according to the present disclosure, extracts PIDs of OTT service installation information, e.g., as previously described with the aid of figures 3 and 4, and adds the discovered OTT/IP channels to the broadcast service discovery information stored in the local memory **804.** The E-descriptor tables indicate processor **801** where to find an entry point for discovering the additional OTT services. For example, during the installation phase, the receiver device **8,** using RF Front End **802,** connects to the transponders described in an embodiment of an E-descriptor described in this disclosure and monitors OTT_PIDs **118/218/310** for discovery of OTT services, which, when discovered, are then added to a list of channels stored in local memory **804** and available to the user of the device **8.** After installation of the receiver **8** the user may select any of the traditional broadcast or OTT channels listed in the local memory **804,** the receiver **8** using information acquired during the installation phase by processor **801** to "tune to", using RF Front End **802,** the particular transponder, to acquire the particular MPEG-TS transport stream transporting contents of the selected traditional broadcast or OTT channel, to decode the elementary streams (audio/video/subtitles, etc.) of the selected channel and to output the decoded streams for rendering via audio/video interface **806** and output **611.** If a user, via a User Interface, instructs processor **801** to tune to a *broadcast* channel, the processor **801** will know, based on the acquired PSI/SI tables, on which transponder to tune the RF Front End **802,** and which PIDs to filter to acquire the transport stream that transports the selected channel. The filtered transport stream is then decoded by processor **801** or by a separate, dedicated processor (not shown). Processor **801** or the separate processor decodes the encoded elementary streams included in the selected transport stream and outputs the elementary streams for rendering by receiver **8** or by a rendering device (not shown) coupled to output **611** of receiver **8.** For the *additional OTT channels,* the acquisition of channel content is different when the user selects an OTT channel. Again, from the service installation information acquired and stored in local memory **804,** processor **801** knows which transponder frequency to tune to for acquisition of a transport stream multiplex that includes a transport stream of the selected OTT channel, and knows the PIDs of the transport stream that must be filtered to acquire the transport stream transporting the encapsulated packets of the selected OTT channel. Once processor **801** has instructed RF Front End **802** to tune to the desired transponder frequency and filters packets with the PIDs of the selected transport stream carrying the encapsulated packets of the selected OTT channel, the resulting filtered transport stream is decapsulated by processor **801,** consisting of removal of the encapsulation (e.g., MPE or ULE) packets. The decapsulated transport stream is then input into adaptive streaming server (AS server) **606** implemented by processor **801** which extracts manifest files and content chunks from the OTT data of the selected OTT channel. Processor **801** then renders available the manifest file information via a local web (e.g., HTTP) server, implemented by processor **801,** on a particular local IP address, e.g., 192.168.1.1 or 10.12.30.196, known by an adaptive streaming receiver implemented by processor **801.** If not already done on by the transmitter, processor **801** modifies the URLs pointing to the content chunks in the manifest files as required, to point to the local IP address of the local HTTP server. This modification includes amending URLs in manifests pointing to content chunks so that these correctly point to the local IP address of the local web server. In addition, processor **801** acquires from the decapsulated transport stream the content chunks referred to in the manifest file(s). Processor **801** temporarily stores the acquired content chunks in a local volatile memory **805,** and makes the manifest file pointing to these chunks available via its local web server. This is a continuously repeated process as processor **801** constantly/repeatedly/regularly/frequently monitors the output of the decapsulation process to retrieve any updates to the manifest file(s) (e.g., arrival of (a) new manifest file(s)) and to retrieves and stores any chunks referred to in the updated manifest file in local volatile memory **805.** Processor **801** retrieves manifest files, retrieves content chunks from the URLs indicated in the manifest file, concatenates these chunks and outputs the concatenated chunks as elementary content streams to a decoder process implemented on processor **801** or on a dedicated processor. This is a constantly repeated process as the manifest file(s) is/are constantly updated processor **801** and new chunks are rendered available processor **801.** Finally, processor **801** or a dedicated processor decodes the elementary content streams (audio/video/data) and outputs these on output **611** for rendering by receiver **8,** or, if an external rendering device (not shown) is used, by the external rendering device coupled to receiver device **8.**

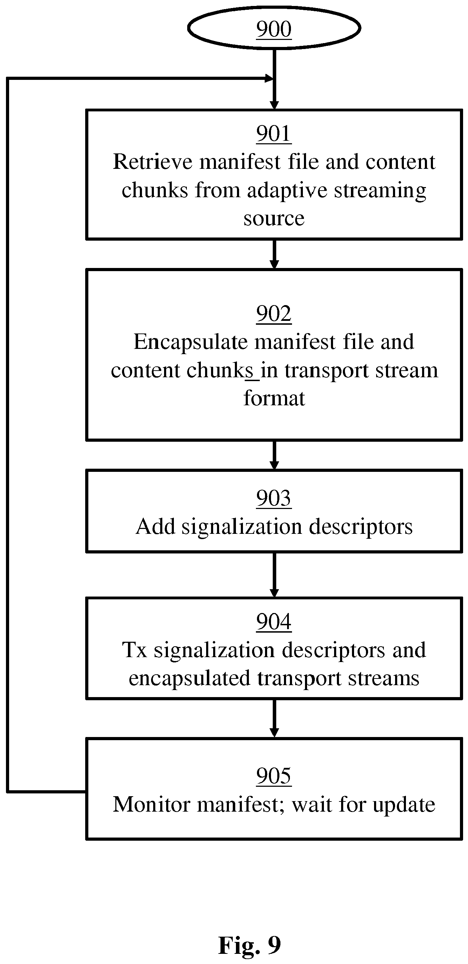

**Figure 9** is a flow chart **900** related to an embodiment of the method for a transmitter device according to the present disclosure. The method is for example implemented by transmitter device **5** or **7.**

In a first step **901,** the transmitter device retrieves, from an adaptive streaming Internet Protocol source, one or more manifest files. Each manifest file comprises references to adaptive streaming content chunks of an adaptive streaming content provided by the adaptive streaming IP source, for one or more bitrates (e.g., high, medium, low bitrate). The transmitter retrieves the manifest file(s) and retrieves the references content chunks of at least one bitrate (e.g., high bitrate). In a step **902,** the transmitter encapsulates, according to an encapsulation protocol for carrying IP streams in a transport stream (e.g., MPE, ULE), the retrieved adaptive streaming content chunks and the manifest file(s), in one or more transport streams (e.g., MPEG2-TS). In a step **903,** the transmitter device adds a to a first signalization descriptor (400) (e.g., NIT or BAT) for discovery of channels by one or more receiver devices (6, 8), one or more packet identifiers of at one or more second signalization descriptors (1, 2, 3, 401) (e.g., E-descriptors). These second signalization descriptors contain, for the one or more receiver devices, tuning information for retrieving one or more transport streams that include the one or more manifest files and the adaptive streaming content chunks of the one or more selected bitrates. In a step **904,** the transmitter device transmits the first and the second signalization descriptors and the one or more transport streams via a unidirectional radio frequency transmission network (e.g., satellite, terrestrial or cable) at destination of the one or more receiver devices. In a step **905,** the transmitter device iterates steps **901-905** for updates received to the one or more manifest files.

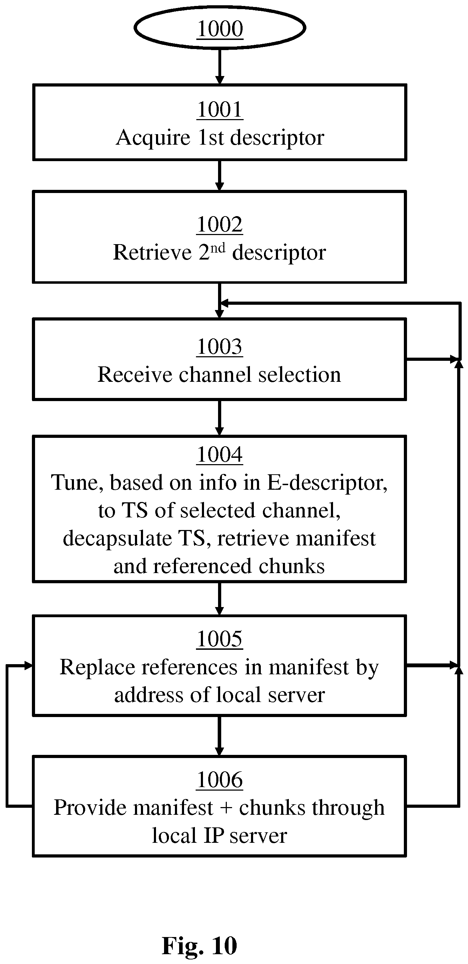

**Figure 10** is a flow chart **1000** of an embodiment of the method for a receiver device according to the present disclosure. The method is for example implemented by receiver device **6** or **8.**

In a first step **1001,** the receiver device acquires from a unidirectional radio frequency transmission network a first signalization descriptor (400) for discovery of channels by the receiver device. In a step **1002,** the receiver device retrieves, from the first signalization descriptor (e.g., NIT or BAT), one or more packet identifiers of one or more second signalization descriptors (e.g., E-descriptors 1, 2, 3, 401) containing, for the receiver device, tuning information for retrieving one or more transponders including one or more transport streams comprising one or more manifest files and adaptive streaming content chunks of one or more bitrates of one or more channels. Steps **1001** and **1002** can be referred to as a service discovery and installation step. In a step **1003,** the receiver device receives a selection (e.g., a user selection, or a scheduled automatic connection as programmed by the user for recording channel contents) of one of the one or more discovered and installed channels. In a step **1004,** the receiver device tunes, based on the tuning information, to a transport stream comprising the selected channel, decapsulates the transport stream (e.g., using decapsulator **604**) and retrieves, from the decapsulated transport stream, a manifest file comprising references to adaptive streaming chunks of the selected adaptive streaming channel and retrieves, from the decapsulated transport stream, the referenced adaptive streaming chunks. In a step **1005,** the receiver device replaces the references in the manifest file by an Internet Protocol address of a local Internet Protocol server (e.g., AS server **606**) in the receiver device, i.e., for URLs in the manifest file pointing to a chunk, it replaces the original http address that points to the adaptive streaming IP source from which the transmitter device obtained the chunk by the http address of the local IP server. In a step **1006,** the receiver device provides, via the local Internet Protocol server, the manifest file and the adaptive streaming chunks referenced therein to an adaptive streaming client (e.g., AS receiver **607**) in the receiver device for acquiring, decoding and rendering of the referenced adaptive streaming chunks of the selected channel. In a step **1006,** the receiver device iterates the replacing step **1005** and the providing step **1006** upon each update received to the manifest file. The iteration ends when another channel is selected, in which case the method returns to step **1003.**

It is to be appreciated that some elements in the drawings may not be used or be necessary in all embodiments. Some operations may be executed in parallel. Embodiments other than those illustrated and/or described are possible. For example, a device implementing the present description may include a mix of hard- and software.

It is to be appreciated that aspects of the description of the present disclosure can be embodied as a system, method or computer readable medium. Accordingly, aspects of the description of the present disclosure can take the form of an entirely hardware embodiment, an entirely software embodiment (including firmware, resident software, micro-code and so forth), or an embodiment combining hardware and software aspects that can all generally be defined to herein as a "circuit", "module" or "system". Furthermore, aspects of the present disclosure can take the form of a computer readable storage medium. Any combination of one or more computer readable storage medium(s) can be utilized.

Thus, for example, it is to be appreciated that the diagrams presented herein represent conceptual views of illustrative system components and/or circuitry embodying the present disclosure. Similarly, it is to be appreciated that any flow charts, flow diagrams, state transition diagrams, pseudo code, and the like represent various processes which may be substantially represented in computer readable storage media and so executed by a computer or processor, whether such computer or processor is explicitly shown.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information there from. A computer readable storage medium can be, for example, but is not limited to, an electronic, magnetic, optical, electromagnetic, infrared, or semiconductor system, apparatus, or device, or any suitable combination of the foregoing. Some or all aspects of the storage medium may be remotely located (e.g., in the 'cloud'). It is to be appreciated that the following, while providing more specific examples of computer readable storage mediums to which the present description can be applied, is merely an illustrative and not exhaustive listing, as is readily appreciated by one of ordinary skill in the art: a hard disk, a read-only memory (ROM), an erasable programmable read-only memory (EPROM or Flash memory), a portable compact disc read-only memory (CD-ROM), an optical storage device, a magnetic storage device, or any suitable combination of the foregoing.

## Claims

1. A method (900) for transmitting adaptive streaming content over a unidirectional radio frequency transmission network, said method being implemented by a radio frequency transmitter (5, 7) and comprising:
retrieving (901), from an adaptive streaming Internet Protocol source, at least one manifest file comprising references to adaptive streaming content chunks of said adaptive streaming content for at least one bitrate and retrieving adaptive streaming content chunks, referenced in said at least one manifest file, of at least one selected bitrate;
encapsulating (902), according to an encapsulation protocol for carrying Internet Protocol streams in a transport stream, the retrieved adaptive streaming content chunks and said at least one manifest file in at least one transport stream;
adding (903), to a first signalization descriptor (400) for discovery of channels by at least one receiver device (6, 8), at least one packet identifier of at least one second signalization descriptor (1, 2, 3, 401) containing, for said at least one receiver device, tuning information for retrieving said at least one transport stream comprising said at least one manifest file and said adaptive streaming content chunks of said at least one selected bitrate;
transmitting (904) the first and the at least one second signalization descriptor and the at least one transport stream via the unidirectional radio frequency transmission network; and
iterating (905) said method for updates received of said at least one manifest file.

2. The method according to claim 1, wherein said selected bitrate is a highest bitrate of said at least one bitrate.

3. The method according to claim 1 or 2, wherein said encapsulating is according to Multiprotocol Encapsulation or Unidirectional Lightweight Encapsulation.

4. The method according to any of claims 1 to 3, wherein said adaptive streaming Internet Protocol source is an Over The Top Internet Protocol source.

5. A method (1000) for receiving adaptive streaming content from a unidirectional radio frequency transmission network, said method being implemented by a radio frequency receiver device (6, 8) and comprising:
acquiring (1001), from said unidirectional radio frequency transmission network, a first signalization descriptor (400) for discovery of channels by said radio frequency receiver device;
retrieving (1002), from said first signalization descriptor, at least one packet identifier of at least one second signalization descriptor (1, 2, 3, 401) containing, for the radio frequency receiver device, tuning information for retrieving at least one transport stream comprising at least one manifest file and adaptive streaming content chunks of at least one bitrate of at least one channel;
receiving (1003) a selection of one of said at least one channel;
tuning (1004), based on said tuning information, to a transport stream comprising said selected channel, decapsulating said transport stream and retrieving, from the decapsulated transport stream, a manifest file comprising references to adaptive streaming chunks of the selected adaptive streaming channel and retrieving, from said decapsulated transport stream, said referenced adaptive streaming chunks;
replacing (1005) said references in said manifest file by an Internet Protocol address of a local Internet Protocol server in said receiver device;
providing (1006), via said local Internet Protocol server, said manifest file and said referenced adaptive streaming chunks to an adaptive streaming client in said radio frequency receiver device for acquiring, decoding and rendering of said referenced adaptive streaming chunks of the selected channel; and
iterating said replacing and said providing upon updates received to said manifest file.

6. The method according to claim 5, wherein said selected bitrate is a highest bitrate of said at least one bitrate.

7. The method according to claim 5 or 6, wherein said encapsulating is according to Multiprotocol Encapsulation or Unidirectional Lightweight Encapsulation.

8. The method according to any of claims 5 to 7, wherein said adaptive streaming Internet Protocol source is an Over The Top Internet Protocol source.

9. A transmitter device (5, 7) for transmitting adaptive streaming content over a unidirectional radio frequency transmission network, said transmitter device comprising a processor (701) configured to:
retrieve, from an adaptive streaming Internet Protocol source, at least one manifest file comprising references to adaptive streaming content chunks of said adaptive streaming content for at least one bitrate and to retrieve adaptive streaming content chunks, referenced in said at least one manifest file, of at least one selected bitrate;
encapsulate, according to an encapsulation protocol for carrying Internet Protocol streams in a transport stream, the retrieved adaptive streaming content chunks and said at least one manifest file in at least one transport stream;
add, to a first signalization descriptor (400) for discovery of channels by at least one receiver device (6, 8), at least one packet identifier of at least one second signalization descriptor (1, 2, 3, 401) containing, for said at least one receiver device, tuning information for retrieving said at least one transport stream comprising said at least one manifest file and said adaptive streaming content chunks of said at least one selected bitrate;
transmit the first and the at least one second signalization descriptor and the at least one transport stream via the unidirectional radio frequency transmission network; and
iterate said adding and said transmitting for updates received of said at least one manifest file.

10. The transmitter device according to claim 9, wherein said selected bitrate is a highest bitrate of said at least one bitrate.

11. The transmitter device according to claim 9 or 10, wherein said encapsulating is according to Multiprotocol Encapsulation or Unidirectional Lightweight Encapsulation.

12. The transmitter device according to any of claims 9 to 11, wherein said adaptive streaming Internet Protocol source is an Over The Top Internet Protocol source.

13. A receiver device (6, 8) for receiving adaptive streaming content from a unidirectional radio frequency transmission network, said receiver device comprising a processor (801) configured to:
acquire, from said unidirectional radio frequency transmission network, a first signalization descriptor (400) for discovery of channels by said receiver device;
retrieve, from said first signalization descriptor, at least one packet identifier of at least one second signalization descriptor (1, 2, 3, 401) containing, for the radio frequency receiver device, tuning information for retrieving at least one transport stream comprising at least one manifest file and adaptive streaming content chunks of at least one bitrate of at least one channel;
receive a selection of one of said at least one channel;
tune, based on said tuning information, to a transport stream comprising said selected channel, to decapsulate said transport stream and to retrieve, from the decapsulated transport stream, a manifest file comprising references to adaptive streaming chunks of the selected adaptive streaming channel and to retrieve, from said decapsulated transport stream, said referenced adaptive streaming chunks;
replace said references in said manifest file by an Internet Protocol address of a local Internet Protocol server in said receiver device;
provide, via said local Internet Protocol server, said manifest file and said referenced adaptive streaming chunks to an adaptive streaming client in said radio frequency receiver device for acquiring, decoding and rendering of said referenced adaptive streaming chunks of the selected channel; and
iterate said replacing and said providing upon updates received to said manifest file.

14. The receiver device according to claim 13, wherein said selected bitrate is a highest bitrate of said at least one bitrate.

15. The receiver device according to claim 13 or 14, wherein said encapsulating is according to Multiprotocol Encapsulation or Unidirectional Lightweight Encapsulation.
